# EUROPEAN PATENT APPLICATION

(11) **EP 1 189 162 A1**
(43) Date of publication of application: **20.03.2002**
(21) Application number: 01120998.8
(22) Date of filing: 31.08.2001
(51) Int. Cl.: G06F 17/60

(54) **Food safety administration system**

(30) Priority: 19.09.2000 JP 2000283142
(71) Applicant: Yokogawa Electric Corporation, Tokyo 180-8750 (JP); Yokogawa M&C Corporation, Musashino-shi, Tokyo 180-0006 (JP)
(72) Inventor: Takeda, Kazumi, Musashino-shi, Tokyo 180-0006 (JP); Murakami, Kenji, Musashino-shi, Tokyo 180-0006 (JP); Kusano, Atsushi, c/o McDonald s Company (JP), Ltd., Shinjuku-ku, Tokyo 163-1339 (JP)
(74) Representative: Henkel, Feiler, Hänzel

(57) **Abstract**

An object of the present invention is to provide a food safety administration system wherein data can be checked quickly and in a paperless way.

The present invention relates to a food safety administration system for controlling the safety of food shops or factories and, in particular, to improvements made to the system. The system comprises a mobile inspection terminal for measuring the temperature of an object under test or inputting data on the pass/fail of the object and recording temperature data or pass/fail data, according to check items on a checklist, thereby controlling the safety of a food shop or factory by means of the temperature or pass/fail data provided as test data by the mobile inspection terminal.

## Description

### BACKGROUND OF THE INVENTION

### Field of the Invention

The present invention relates to a food safety administration system for controlling the hygiene or safety of food shops or factories dealing with such food as hamburgers and, in particular, the hygiene or safety of food dealt with by such shops or factories. More specifically, the present invention is concerned with a food safety administration system that improves the work efficiency of checkers and eliminates the need for paper-based checklists.

### Description of the Prior Art

Every food shop or factory that has introduced a HACCP system is obligated to maintain and control records of test data. For example, conventionally a food shop checks daily a number of temperature and pass/fail data items for hygienic control of food, such as hamburgers. Then, the shop fills in the results of checking the data items on a paper-based checklist. This practice may not be problematic if only one food shop is involved. Several thousand food shops check data every day, however, and consume enormous amounts of paper. Thus, the practice has become an issue in view of people's recent concern with environment preservation. Furthermore, paper-based recording involves bringing a large amount of "foreign matter" into a work area. Accordingly, a food safety administration system of the prior art has involved the risk of foreign matter getting mixed with food or has had other hygienic problems.

Another point to note about the prior art system is that a checker has to carry paper-based checklists, writing equipment and a digital thermometer and take note of the test results, since test points are located in various places within a food shop. Thus, the checker moves to the test point in question, looks for a place to put the checklists on, takes out the digital thermometer to measure the temperature of the test point, takes up the writing equipment to note the measured temperature on a checklist, then moves to another test point with the checklists, writing equipment and digital thermometer in hand. Thus, the checker's work of checking data has been inefficient and time consuming.

### SUMMARY OF THE INVENTION

It is an object of the present invention to provide a food safety administration system wherein data can be checked quickly and in a paperless way.

### BRIEF DESCRIPTION OF THE DRAWINGS

FIG. 1 is a block diagram showing one embodiment of the present invention.
FIG. 2 is a schematic external view of a mobile inspection terminal 100 shown in FIG. 1.
FIG. 3 is an example of a checklist 212 shown in FIG. 1.
FIG. 4 is a flowchart showing the way the mobile inspection terminal 100 behaves.
FIG. 5 is a flowchart detailing the way temperature data is processed in FIG. 4.
FIG. 6 is an example of a data sheet 215 shown in FIG. 1.

### DETAILED DESCRIPTION OF THE PREFERRED EMBODIMENTS

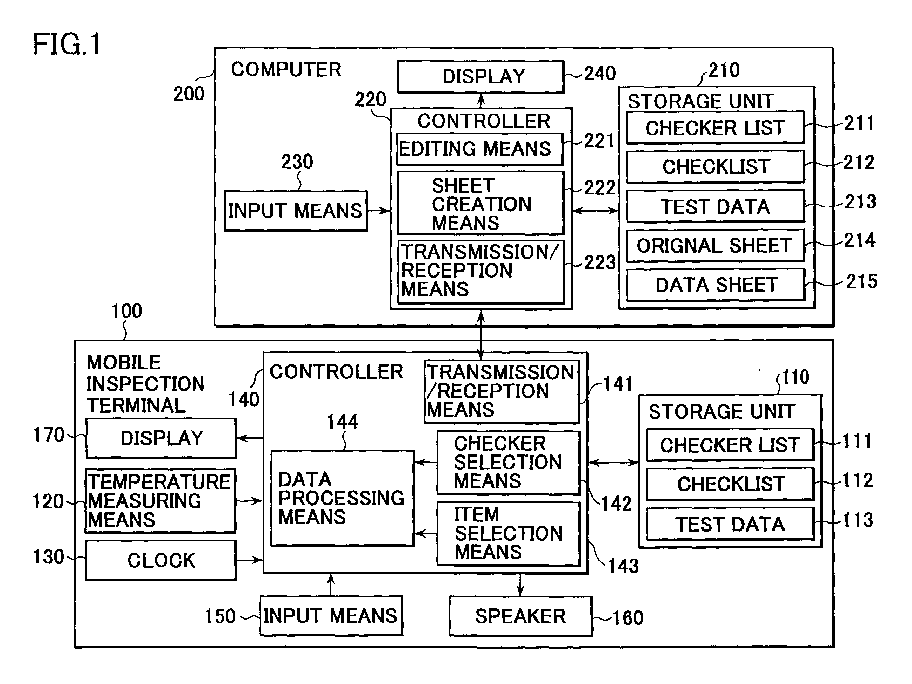

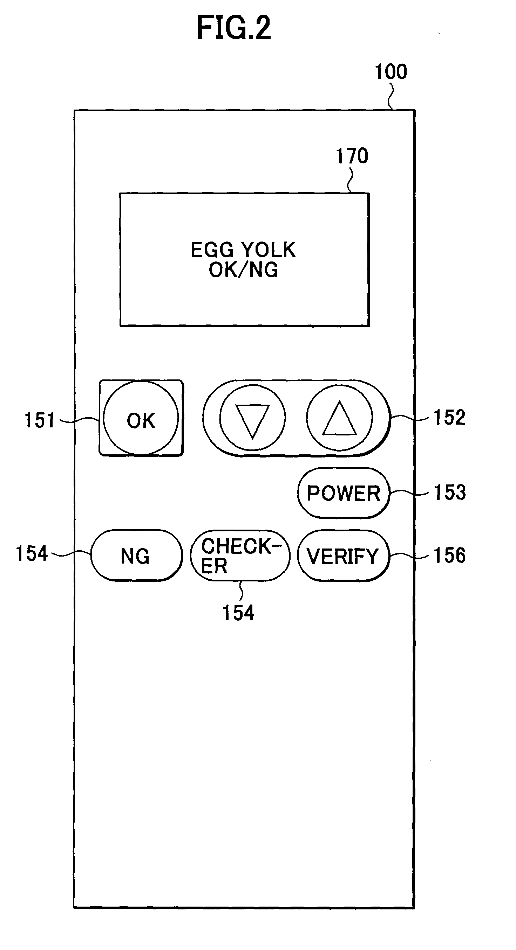

A preferred embodiment of the present invention will now be described in detail with reference to the accompanying drawings. FIG. 1 is a block diagram showing one embodiment of the present invention and FIG. 2 is a schematic external view of a mobile inspection terminal 100 shown in FIG. 1. It should be noted here that a sensor probe, which would otherwise be connected to the top end of the mobile inspection terminal, is omitted from FIG. 2.

In FIG. 1, the mobile inspection terminal 100 is of a portable size and designed to communicate with a computer 200. The method of this communication is not limited to a wired system, wireless system or optical system. The mobile inspection terminal 100 comprises a storage unit 110, temperature measuring means 120, a clock 130, a controller 140, input means 150, a speaker 160, and a display 170 (e.g., LCD). The computer 200 comprises a storage unit 210, a controller 220, input means 230, and a display 240.

The storage unit 110 is, for example, a memory device, and stores a checker list 111, a checklist 112, and test data 113. The checker list 111 is a list of checker data items, the checklist 112 is a list of check items to be checked, and the test data 113 is the result of checking the check items.

The temperature measuring means 120 measures the temperature of an object under test, such as food or a refrigerator. The clock 130 outputs date/time data. Note that the date/time data includes all possible cases, i.e., a date only, a time only, and both the date and time.

The controller 140 is connected to the storage unit 110, temperature measuring means 120, clock 130, input means 150, speaker 160 and display 170, and comprises transmission/reception means 141, checker selection means 142, item selection means 143 and data processing means 144.

The transmission/reception means 141 exchanges data with the computer 200 and writes data to the storage unit 110 or reads data therefrom. The checker selection means 142 selects from checker data items on the checker list 111 in the storage unit 110 to show the data item on the display 170. The item selection means 143 selects from check items on the checklist 112 in the storage unit 110 to show the check item on the display 170. The data processing means 144 accepts the input of checker data from the checker selection means 142, input of a check item from the item selection means 143, input of temperature data from the temperature measuring means 120, and input of date/time data from the clock 130. Thus, the data processing means 144 processes data according to the check item, shows the result of data processing on the display 170, sounds the speaker 160, and stores the result of checking the check item in the storage unit 110 as an item of the test data 113, together with the date/time data, check item and checker data.

The input means 150 consists of, for example, buttons 151 to 156, and orders the checker selection means 142 and item selection means 143 to select a checker data item and a check item, respectively. The input means 150 also orders the data processing means 144 to acquire temperature data from the temperature measuring means 120 or inputs pass/fail data (e.g., OK/NG). The button 151 is an OK button, the button 152 is a SELECT button, the button 153 is a POWER button, the button 154 is an NG button, the button 155 is a CHECKER button, and the button 156 is a VERIFY button.

The storage unit 210 is, for example, a hard disk and stores a checker list 211, a checklist 212, test data 213, an original sheet 214 and a data sheet 215. The checker list 211, checklist 212 and test data 213 are the same as the checker list 111, checklist 112 and test data 113 in the storage unit 110. The original sheet 214 is a sheet used to create the data sheet 215. The data sheet 215 is a sheet obtained by recording the test data 213 on the original sheet 214 and is also a table of the results of checking check items.

The controller 220 is connected to the storage unit 210, input means 230 and display 240, and consists of editing means 221, sheet creation means 222 and transmission/reception means 223. The editing means 221 shows the checker list 211 and checklist 212 in the storage unit 210 on the display 240 so that the lists may be edited. The sheet creation means 222 creates the data sheet 215 from the test data 213 and original sheet 214 to show the data sheet on the display 240. The transmission/reception means 223 exchanges data with the mobile inspection terminal 100 and writes data to the storage unit 210 or reads data therefrom.

The input means 230 is, for example, a keyboard or mouse and gives instructions to the editing means 221, sheet creation means 222 and transmission/reception means 223. The way the system configured as described above behaves is explained now, beginning with the preprocessing carried out prior to checking data.

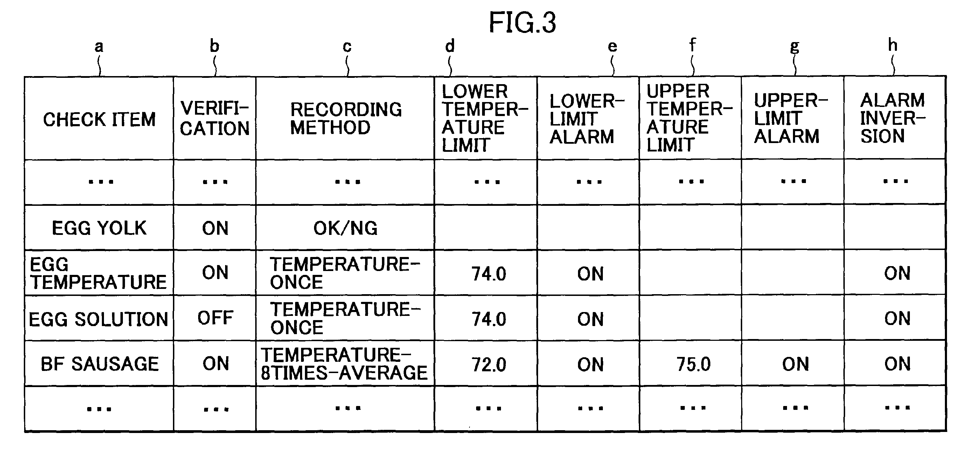

The editing means 221, as instructed by the input means 230, shows the checker list 211 and checklist 212 on the display 240, edits the lists (or creates new lists) and stores them in the storage unit 210. The checklist 212 is created in such a format as shown in FIG. 3.

The column "Check Item" indicated by **a** lists data items to be measured or checked. The column "Verification" indicated by **b** identifies whether or not input of the result of checking each item in the column **a** "Check Item" should be verified. The column "Recording Method" indicated by **c** shows the type of test data 113, i.e., OK/NG, temperature, average temperature or minimum temperature. The column "Lower Temperature Limit" indicated by **d** denotes the lower limit of temperature measurement criteria. The column "Lower-limit Alarm" indicated by **e** shows that if any lower limit is set in the column **d** and the corresponding field of the column **e** is set to ON, then the alarm is enabled. The column "Upper Temperature Limit" indicated by **f** denotes the upper limit of temperature measurement criteria. The column "Upper-limit Alarm" indicated by **g** shows that if any upper limit is set in the column **f** and the corresponding field of the column **g** is set to ON, then the alarm is enabled. The column "Alarm Inversion" indicated by **h** is set to OFF if the alarm is raised for temperatures outside the upper and lower limits of a given reference temperature, or set to ON if the alarm is raised for temperatures within the upper and lower limits. The conditions set in the column **d** "Lower Temperature Limit," column **e** "Lower-limit Alarm," column **f** "Upper Temperature Limit," column **g** "Upper-limit Alarm" and column **h** "Alarm Inversion" serve as those of an average temperature or minimum temperature if such a type of temperature is set in the column **c** "Recording Method."

As instructed by the input means 230, the transmission/reception means 223 reads the checker list 211 and checklist 212 from the storage unit 210 to send the lists to the mobile inspection terminal 100. The transmission/reception means 141 of the mobile inspection terminal 100 receives the lists and stores them in the storage unit 110.

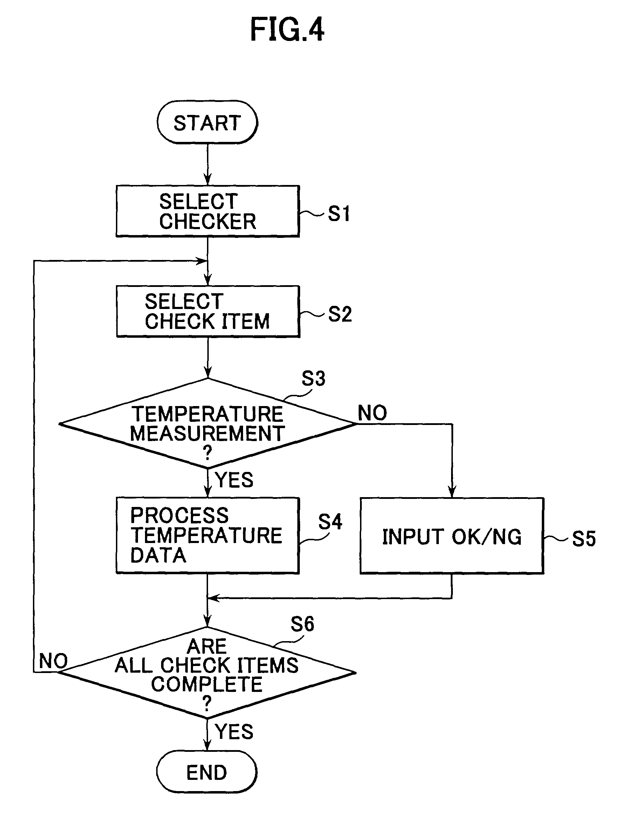

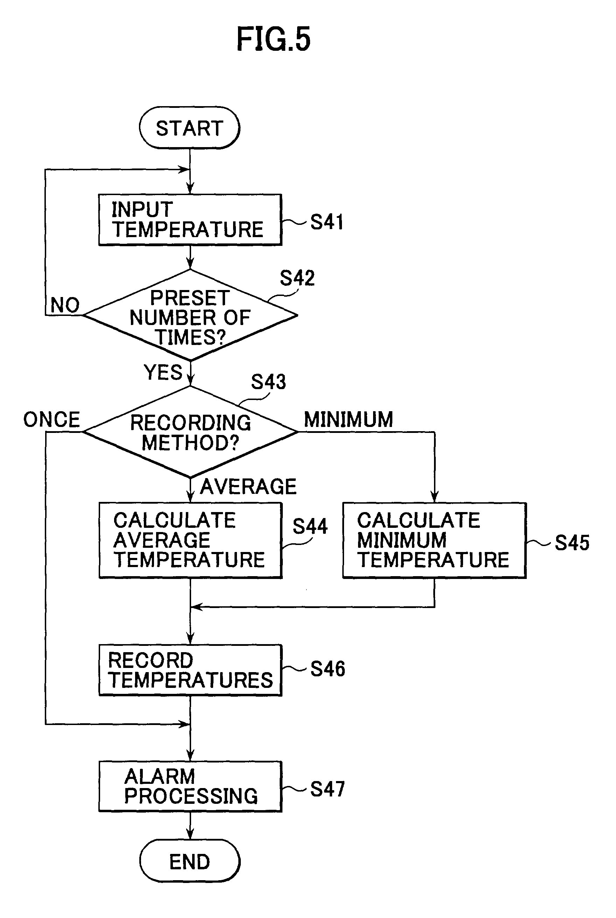

Next, the way data is checked is explained by referring to FIG. 4 which is a flowchart showing the way the mobile inspection terminal 100 behaves and also to FIG. 5 which is another flowchart detailing the way temperature data is processed in FIG. 4.

The button 153 is pressed to turn on the mobile inspection terminal 100. Then, upon pressing the button 155, the checker selection means 142 reads the checker list 111 from the storage unit 110 and shows checker data on the display 170. Upon pressing the button 152, the checker selection means 142 scrolls through a list of checker data items on the display 170. Upon pressing the button 151, a checker data item is selected and the checker selection means 142 sends the data item to the data processing means 144 (step S1).

Upon pressing the button 152, the item selection means 143 reads the checklist 112 from the storage unit 110 and shows an item of the column **a** "Check Item" in the upper section of the display 170. If the option for the column **c** "Recording Method" is OK/NG, the item selection means 143 shows OK/NG in the lower section of the display 170. If the option is temperature, the item selection means 143 shows the temperature range defined by the column **d** "Lower Temperature Limit" and column **f** "Upper Temperature Limit" in the lower section of the display 170. These readings are made to disappear in a few seconds. Then, the data processing means 144 acquires time data from the clock 130 to show the time in the upper section of the display 170, as well as acquires temperature data from the temperature measuring means 120 to show the temperature in the lower section of the display 170. The item selection means 143 also sends check items (data items selected from the column **a** "Check Item," column **b** "Check"," column **c** "Recording Method," column **d** "Lower Temperature Limit," column **e** "Lower-limit Alarm," column **f** "Upper Temperature Limit," column **g** "Upper-limit Alarm," and column **h** "Alarm Inversion") to the data processing means 144 (step S2).

If the option for the column **c** "Recording Method" is temperature, temperature data is processed (steps S3 and S4). More specifically, a sensor probe, which is not shown in FIG. 2, is brought into contact with the object under test. Upon pressing the button 151, the data processing means 144 receives input of temperature data from the temperature measuring means 120 and input of date/time data from the clock 130. Then, the data processing means 144 stores these data items in the storage unit 110 as items of the test data 113, together with data in the column **a** "Check Item" and checker data (step S41).

If no entry is made in the Preset Number of Times field of a cell under the column **c** "Recording Method," the data processing means 144 also receives input of temperature data from the temperature measuring means 120 and input of date/time data from the clock 130 upon pressing the button 151 again. Then, the data processing means 144 also stores these data items in the storage unit 110 as items of the test data 113, together with data in the column **a** "Check Item" and checker data (steps S42 and S41). If an entry is made in the Preset Number of Times field, the data processing means 144 proceeds to the next process (step S42).

In a further step, the data processing means 144 checks the column **c** "Recording Method" (step S43). If the Preset Number of Times field of a cell under the column **c** is set to "once," the data processing means 144 proceeds to the next process. If "average temperature" is specified for a cell under the column **c**, the data processing means 144 reads as many temperature data items as the preset number of times from the test data 113 in the storage unit 110, calculates the average temperature, and shows the temperature on the display 170 (step S44). If "minimum temperature" is specified for the cell under the column **c**, the data processing means 144 reads as many temperature data items as the preset number of times from the test data 113 in the storage unit 110, calculates (selects) the minimum temperature, and shows the temperature on the display 170 (step S45). Upon pressing the button 151, the data processing means 144 stores the average or minimum temperature shown on the display 170 in the storage unit 110 as an item of the test data 113, together with data in the column **a** "Check Item" and checker data (step S46).

In a further step, the data processing means 144 sounds the alarm through the speaker 160 if the temperature data to be stored in the storage unit 110 satisfies the conditions set in the column **d** "Lower Temperature Limit, " column **e** "Lower-limit Alarm," column **f** "Upper Temperature Limit," column **g** "Upper-limit Alarm, " and column **h** "Alarm Inversion" of the checklist 112. Consequently, the checker can readily know whether or not the result of temperature measurement complies with the given reference temperature requirement.

In a case where the OK/NG option is selected for a cell under the column **c** "Recording Method," OK is input upon pressing the button 151 and NG is input upon pressing the button 154. The data processing means 144 stores the date/time data of the clock 130, OK/NG data, checker data and data in the column **a** "Check Item" in the storage unit 110 as items of the test data 113 (step S5).

If there is any check item or items yet to be checked, the checker presses the button 152 once again. The item selection means 143 reads the next check item from the checklist 112 in the storage unit 110 and shows the item on the display 170, in order to repeat the above-noted process (steps S6 and S2). When the checker is through with all check items, the process of checking data comes to completion (step S6).

Upon pressing the button 156, the item selection means 143 checks the checklist 112 and test data 113 in the storage unit 110. Then, the item selection means 143 shows on the display 170 the number of check items for which the column **b** "Verification" of the checklist 112 is set to ON and for which no test data is provided. By pressing the button 152, the checker can successively show the check items under the column **a** that lack test data, in order to proceed with the above-noted process of checking data.

Finally, post-processing based on the computer 200 is explained with reference to FIG. 1. When an instruction to transmit data is given by the input means 230, the transmission/reception means 223 requests the transmission/reception means 141 to send data. Then, the transmission/reception means 141 reads the test data 113 from the storage unit 110 to send the data to the transmission/reception means 223. The transmission/reception means 223 stores the received data in the storage unit 210 as the test data 213.

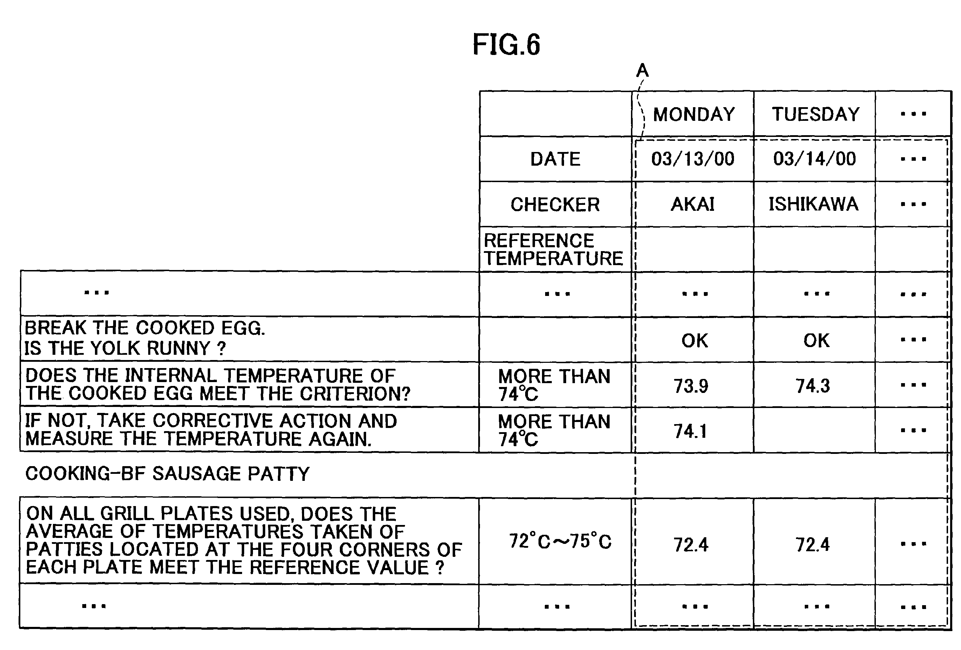

As instructed by the input means 230, the sheet creation means 222 creates a data sheet, such as a data sheet 215 shown in FIG. 6, from the test data 213 and original sheet 214 stored in the storage unit 210. The sheet creation means 222 then shows the data sheet on the display 240, as well as stores the sheet in the storage unit 210. More specifically, the test data 213 is applied to table cells enclosed by the dotted line A in FIG. 6, thereby creating the data sheet 215. At this point, the checker data item highest on the list is entered into each checker field.

To be even more specific, the sheet creation means 222 consists of table calculation and processing means, i.e., such spreadsheet software as Microsoft Excel, and of a macroprogram for creating the data sheet 215 by combining the test data 213 and original sheet 214. This means, the macroprogram, test data 213, original sheet 214 and data sheet 215 are integrated into a single data file in most cases when the sheet creation means 222 is configured using table calculation and processing means.

As is understood from the above-described preferred embodiment, the food safety administration system of the present invention has the following advantages:
1) The mobile inspection terminal 100 is used to record temperature data and pass/fail data. Consequently, there is no need for recording data on sheets of paper. Thus, the checker can check data with high efficiency and quickly, while operating the system in a paperless way.
2) By referring to the checklist 112 and test data 113, the item selection means 143 of the mobile inspection terminal 100 selects and displays those check items which lack corresponding test data. Consequently, it is possible to prevent any check item from being accidentally left out.
3) The mobile inspection terminal 100 displays the upper and lower limits of each reference temperature, together with check items. Consequently, there is no need for the checker to remember the limits, thereby preventing any mistake in checking data.
4) The checker selection means 142 of the mobile inspection terminal 100 selects checker data from the checker list 111. The mobile inspection terminal 100 then handles the checker data as an item of the test data 113. Consequently, it is possible to readily know who is responsible for the given test results.
5) The mobile inspection terminal 100 handles the data/time data of the clock 130 as an item of the test data 113. Consequently, it is possible to record the date and time of the test results.
6) The test data 113 is transferred from the mobile inspection terminal 100 to the computer 200. The sheet creation means 222 then creates the data sheet 215 from the test data 213 and original sheet 214. Consequently, it becomes easy to summarize test results.
7) The checklist 212 is edited using the editing means 221 of the computer 200 and sent to the mobile inspection terminal 100. Consequently, it is easy to reorder or increase/decrease check items on the checklist 212 provided as standard. This means the checker can sequentially show check items tailored to a particular food shop or factory, irrespective of how the equipment layout or number of equipment differs from shop to shop or from factory to factory, thus increasing work efficiency.
8) The checker list 211 is edited using the editing means 221 of the computer 200 and sent to the mobile inspection terminal 100. Consequently, it is easy to make changes to checker data.

It should be noted here that the present invention is in no way limited to the above-described embodiment. Although in one aspect of the embodiment according to the present invention, the pass/fail data is represented as OK/NG, such a representation as YES/NO, OK/NO or good/bad may be used instead. In other words, any representation is acceptable as long as a pass/fail judgment can be made.

In another aspect of the embodiment, the data processing means 144 stores checker data in the storage unit 110 for each temperature or checker data item. Alternatively, the food safety administration system may be configured in such a manner that checker data is stored for a series of check items.

Similarly, the data processing means 144 stores check items in the storage unit 110 for each temperature or checker data item. Alternatively, the food safety administration system may be configured in such a manner that each check item is stored as an item of the test data 113 when selected by the item selection means 143. Still alternatively, the system may be configured so that the data processing means 144 does not store check items as items of the test data 113; rather, the system may be configured so that the data processing means 144 stores each check item in a location within the storage unit 110 corresponding to that check item. Thus, the check item is identified according to the location thereof within the storage unit 110.

In yet another aspect of the embodiment, the test data 113 is transferred from the mobile inspection terminal 100 to the computer 200 so that the data sheet 215 is created. Alternatively, the system may be configured so that the test data 113 is stored in a database. This system configuration will make it possible to carry out food safety administration or other administrative tasks for all relevant food shops or factories.

In yet another aspect of the embodiment, the sheet creation means 222 creates the data sheet 215 from the test data 213 and original sheet 214. Alternatively, the system may be configured so that the sheet creation means 222 creates the data sheet 215 from the test data 213 only, without using the original sheet 214.

In yet another aspect of the embodiment, the mobile inspection terminal 100 comprises the temperature measuring means 120. Alternatively, the system may be configured so that the mobile inspection terminal 100 comprises means for measuring such variables as wind speed, humidity, noise, voltage, and current, and the data thus measured is added to the test data.

It should be noted that the terms "food shop" and "food factory" referred to herein encompass the cafeterias and kitchens of hospitals, companies, and the like.

## Claims

1. A food safety administration system, comprising a mobile inspection terminal for measuring the temperature of an object under test or inputting data on the pass/fail of the object according to check items on a checklist and recording temperature data or pass/fail data, thereby controlling the safety of a food shop or factory by means of said temperature data or pass/fail data provided as test data by said mobile inspection terminal.

2. A food safety administration system, comprising a mobile inspection terminal for measuring the temperature of an object under test or inputting data on the pass/fail of the object according to check items on a checklist and recording temperature data or pass/fail data, thereby controlling the hygiene or safety of food by means of said temperature data or pass/fail data provided as test data by said mobile inspection terminal.

3. The food safety administration system of claim 1 or 2, wherein said mobile inspection terminal comprises:
temperature measuring means for measuring the temperature of an object under test;
a storage unit for storing a checklist and test data;
item selection means for selecting from check items on said checklist in said storage unit;
input means for giving instructions to said item selection means and ordering said temperature measuring means to acquire temperature data or inputting pass/fail data; and
data processing means for storing said temperature data provided by said temperature measuring means or said pass/fail data provided by said input means in said storage unit as said test data, according to a check item selected by said item selection means.

4. The food safety administration system of claim 3, wherein said mobile inspection terminal selects check items lacking corresponding test data from said checklist and said test data.

5. The food safety administration system of any of claims 1 to 4, wherein said checklist contains reference temperatures and said mobile inspection terminal displays said reference temperatures together with check items.

6. The food safety administration system of any of claims 1 to 5, wherein said mobile inspection terminal comprises checker selection means for selecting checker data from a checker list and handling said checker data selected by said checker selection means as a test data item.

7. The food safety administration system of any of claims 1 to 6, wherein said mobile inspection terminal comprises a clock for outputting a date or a time or both and handling the output of said clock as a test data item.

8. The food safety administration system of any of claims 1 to 7, further comprising a computer into which said test data of said mobile inspection terminal is input in order to create a table of test results.

9. The food safety administration system of any of claims 1 to 8, further comprising a computer whereby said checklist is edited and input to said mobile inspection terminal.

10. The food safety administration system of claim 6, further comprising a computer whereby said checker list is edited and input to said mobile inspection terminal.
